# EUROPÄISCHE PATENTSCHRIFT

(11) **EP 3 247 528 B1**
(45) Veröffentlichungstag und Bekanntmachung des Hinweises auf die Patenterteilung: **10.04.2019**
(21) Anmeldenummer: 16703058.4
(22) Anmeldetag: 21.01.2016
(51) Int. Cl.: B23K 26/03, B23K 26/06, B23K 26/14, G02B 23/26, G02B 27/00

(54) **BEARBEITUNGSKOPF FÜR DIE MATERIALBEARBEITUNG MIT EINER MEHRERE UMLENKELEMENTE UND LICHTQUELLEN UMFASSENDEN BELEUCHTUNGSEINHEIT**
MACHINING HEAD FOR MACHINING MATERIALS, HAVING AN ILLUMINATION UNIT COMPRISING MULTIPLE LIGHT SOURCES AND DEFLECTING ELEMENTS
TÊTE D'USINAGE SERVANT À L'USINAGE DE MATÉRIAUX, MUNIE D'UNE UNITÉ D'ÉCLAIRAGE COMPRENANT PLUSIEURS SOURCES LUMINEUSES ET ÉLÉMENTS DE RENVOI

(30) Priorität: 23.01.2015 DE 102015201140
(43) Veröffentlichungstag der Anmeldung: 29.11.2017
(73) Patentinhaber: Fraunhofer-Gesellschaft zur Förderung der angewandten Forschung e.V., 80686 München (DE); Scansonic MI GmbH, 12681 Berlin (DE)
(72) Erfinder: ABELS, Peter, 52477 Alsdorf (DE); UNGERS, Michael, 10367 Berlin (DE); THOMBANSEN, Ulrich, 52064 Aachen (DE); MEYER, Daniel, 52499 Baesweiler (DE); FRANZ, Christoph, 10245 Berlin (DE)
(74) Vertreter: Kaufmann, Sigfrid
(86) Internationale Anmeldenummer: PCT/EP2016/000112
(87) Internationale Veröffentlichungsnummer: WO 2016/116279

(56) Entgegenhaltungen:
- JP-A- H0 332 482
- JP-A- 2011 110 558
- US-A- 5 562 842
- US-A1- 2003 202 233

## Beschreibung

### Technisches Anwendungsgebiet

Die vorliegende Erfindung betrifft einen Bearbeitungskopf für die Materialbearbeitung, insbesondere die Laserbearbeitung, gemäß dem Oberbegriff des Anspruchs 1 (siehe, z.B., JP 2011 110558 A).

Bei Fertigungssystemen für die Lasermaterialbearbeitung spielt der Einsatz von Sensorik, insbesondere von Kamera-basierten Überwachungsstrategien, eine zentrale Rolle. Die Beleuchtung der Prozesszone, in der vorliegenden Patentanmeldung auch als Bearbeitungsbereich bezeichnet, stellt dabei eine große Herausforderung dar. Mittels Fremdbeleuchtung soll hierbei ein geometrisches Bild der Umgebung des Bearbeitungspunktes gewonnen werden, das eine minimale Bewegungsunschärfe aufweist. Dies stellt eine Reihe von Anforderungen an die Beleuchtungseinheit. Zum einen sollte die Beleuchtungsstrahlung in der Lage sein, die Emission des Bearbeitungsprozesses zu überstrahlen, zum anderen darf durch die zusätzliche Beleuchtung keine Störkontur am Bearbeitungskopf entstehen, welche die Bewegungsfreiheit des Bearbeitungskopfes beeinträchtigt.

### Stand der Technik

Es sind Bearbeitungsköpfe für die Laserbearbeitung bekannt, bei der die zusätzliche Beleuchtung durch Laserstrahlung realisiert wird, die bspw. über Lichtleitfasern an den Bearbeitungskopf herangeführt werden kann. Allerdings weist eine auf Lasern basierende Beleuchtung oft eine starke Richtungsabhängigkeit auf und erzeugt bei Überlagerung Interferenzeffekte, die eine automatisierte Auswertung der mit der Kamera aufgezeichneten Bilder erschweren. Eine koaxiale Einkopplung eines Beleuchtungslasers erfordert zusätzliche Strahlteiler oder Lochspiegel. Weiterhin muss ein zusätzlicher Faseranschluss am Bearbeitungskopf vorgesehen werden, durch den Störkonturen entstehen. Die koaxiale Einkopplung erzeugt hohe Verluste beim Einkoppeln der Strahlung durch den 50/50 Strahlteiler, der zum Einkoppeln der Strahlung in den Strahlengang der Kamera benötigt wird. Die zusätzlichen Grenzflächen im Strahlengang verursachen unter Umständen unerwünschte Reflexionen, die das Kameraabbild stören können.

Aus der WO 00/29166 A1 ist ein Bearbeitungskopf zum Bearbeiten von Werkstücken mit Hochenergiestrahlung bekannt, der in einer Ausgestaltung eine Beleuchtungseinheit mit mehreren Lichtquellen aufweist, die zwischen der Fokussiereinheit und dem Bearbeitungsbereich am Bearbeitungskopf angeordnet ist. Dadurch ergibt sich ein kompakter Aufbau der Beleuchtungseinheit, durch den die Laserbearbeitung nicht gestört wird. Die Lichtquellen sind dabei so in der Beleuchtungseinheit angeordnet, dass sie den Bearbeitungsbereich direkt quasi-koaxial bestrahlen. Bei einer derartigen Ausgestaltung des Bearbeitungskopfes ergeben sich jedoch Einschränkungen, da durch den kurzen Strahlweg zwischen den Lichtquellen der Beleuchtungseinheit und dem Bearbeitungsbereich eine ausreichende Strahlaufweitung oder Strahlformung der Beleuchtungsstrahlung nur unzureichend möglich ist.

Die Aufgabe der vorliegenden Erfindung besteht darin, einen Bearbeitungskopf für die Materialbearbeitung, beispielsweise für die Laserbearbeitung, anzugeben, der eine effiziente Beleuchtung des gesamten Bearbeitungsbereiches ermöglicht und keine Störkonturen am Bearbeitungskopf verursacht, die die Materialbearbeitung stören könnten.

### Darstellung der Erfindung

Die Aufgabe wird mit dem Bearbeitungskopf gemäß Patentanspruch 1 gelöst. Vorteilhafte Ausgestaltungen des Bearbeitungskopfes sind Gegenstand der abhängigen Patentansprüche oder lassen sich der nachfolgenden Beschreibung sowie den Ausführungsbeispielen entnehmen.

Der vorgeschlagene Bearbeitungskopf umfasst wenigstens eine Führungseinrichtung für einen Bearbeitungsstrahl und/oder für wenigstens eine Elektrode, mit der der Bearbeitungsstrahl auf einen Bearbeitungsbereich gerichtet und/oder die wenigstens eine Elektrode an einen Bearbeitungsbereich herangeführt werden kann, eine Beleuchtungseinheit, die mehrere Lichtquellen aufweist und durch die Lichtquellen erzeugte Beleuchtungsstrahlung in Beleuchtungsrichtung des Bearbeitungsbereiches emittieren kann, und einen optischen Detektor, mit dem während der Materialbearbeitung vom Bearbeitungsbereich reflektiere und/oder rückgestreute Beleuchtungsstrahlung erfassbar ist. Der Bearbeitungskopf zeichnet sich dadurch aus, dass die Beleuchtungseinheit mehrere Umlenkelemente für eine Umlenkung optischer Strahlung um einen festen Winkel aufweist und die Lichtquellen und optischen Umlenkelemente so in der Beleuchtungseinheit angeordnet sind, dass die von den Lichtquellen erzeugte Beleuchtungsstrahlung über die optischen Umlenkelemente in Richtung des Bearbeitungsbereiches gerichtet wird und sich dort vollständig oder wenigstens teilweise überlagert. Die Lichtquellen und Umlenkelemente sind dabei selbstverständlich so angeordnet, dass sie den Bearbeitungsstrahl nicht behindern.

Die Beleuchtungseinheit mit den Lichtquellen und Umlenkelementen sind dabei so in den Bearbeitungskopf integriert, dass sie die laterale Außenkontur der Führungseinrichtung, d.h. deren Abmessungen senkrecht zur Beleuchtungsrichtung, vorzugsweise nicht überschreiten. Dadurch wird für den Bearbeitungskopf die Zugänglichkeit zum Bearbeitungsbereich nicht beeinträchtigt.

In einer vorteilhaften Ausgestaltung des Bearbeitungskopfes weist die Führungseinrichtung eine Bearbeitungsoptik mit einer Fokussiereinheit auf, mit der der Bearbeitungsstrahl, insbesondere ein Laserstrahl, auf den Bearbeitungsbereich fokussierbar ist. Die Beleuchtungseinheit kann dabei auch unterhalb der Fokussiereinheit bzw. Fokussieroptik, d.h. zwischen der Fokussiereinheit und dem Bearbeitungsbereich, angeordnet sein. Dadurch kann die Beleuchtungsstrahlung effektiv auf den Bearbeitungsbereich gerichtet werden, ohne zusätzliche strahlaufteilende Elemente im Bearbeitungskopf vorsehen zu müssen. Als Bearbeitungsstrahl kann auch ein anderer energetischer Strahl, beispielsweise ein Elektronen- oder ein Ionenstrahl eingesetzt werden.

Weiterhin kann der Bearbeitungskopf auch für das Lichtbogenschweißen eingesetzt werden, wobei dann die zur Erzeugung des Lichtbogens erforderliche Elektrode mit der Führungseinrichtung geführt wird. Auch eine Kombination einer Bearbeitung mit einem Bearbeitungsstrahl und mittels Lichtbogenschweißen ist durch entsprechende Ausgestaltung des Bearbeitungskopfes möglich.

Durch die zusätzliche feste Umlenkung der Beleuchtungslaserstrahlung über die optischen Umlenkelemente wird der Strahlweg zwischen den Lichtquellen und dem Bearbeitungsbereich verlängert, so dass dadurch eine bessere Möglichkeit zur Strahlformung der Beleuchtungsstrahlung geschaffen wird, insbesondere für eine flächige Ausleuchtung des Bearbeitungsbereiches. So kann durch den vergrößerten Strahlweg bspw. eine verbesserte Homogenisierung der Beleuchtungsstrahlung im Bearbeitungsbereich, eine stärkere Strahlaufweitung und/oder eine verbesserte Überlagerung der Beleuchtungsstrahlung verschiedener Lichtquellen im Bearbeitungsbereich erreicht werden. Bei den optischen Umlenkelementen handelt es sich dabei vorzugsweise um Prismen oder Spiegel. Durch diese optischen Umlenkelemente wird die Beleuchtungsstrahlung beim vorgeschlagenen Bearbeitungskopf nicht koaxial, sondern unter einem geringen Winkel zur Bearbeitungsstrahlung auf den Bearbeitungsbereich gelenkt. Aufgrund des nur geringen Winkels entspricht dies einer quasi-koaxialen Beleuchtung. Die Lichtquellen und optischen Umlenkelemente sind dabei jeweils vorzugsweise im Randbereich der Beleuchtungseinheit angeordnet. Unter dem Randbereich ist hierbei der Bereich mit dem größten Abstand zur zentralen Achse der Bearbeitungsstrahlung zu verstehen. Im Falle des Einsatzes von Laserstrahlung als Bearbeitungsstrahlung mit einer Fokussiereinheit entspricht die zentrale Achse der optischen Achse der Fokussiereinheit.

Zur möglichst gleichmäßigen und richtungsunabhängigen Ausleuchtung des Bearbeitungsbereiches sind die Lichtquellen vorzugsweise um die zentrale Achse der Bearbeitungsstrahlung verteilt angeordnet. Die Beleuchtungskegel dieser einzelnen Lichtquellen werden dabei über die optischen Umlenkelemente derart auf den Bearbeitungsbereich gerichtet, dass sie sich dort vollständig oder zumindest teilweise überlappen.

In einer Ausgestaltung des vorgeschlagenen Bearbeitungskopfes sind hierbei die Lichtquellen und optischen Umlenkelemente in der gleichen Ebene senkrecht zur Beleuchtungsrichtung angeordnet, so dass die Beleuchtungsstrahlung in dieser Ebene von den Lichtquellen zu den Umlenkelementen propagiert. Die Umlenkelemente können jedoch auch in einer anderen Ebene als die Lichtquellen angeordnet sein. Auch eine Kombination beider Ausgestaltungen ist möglich. Bei dem vorgeschlagenen Bearbeitungskopf kann jeder Lichtquelle ein separates optisches Umlenkelement zugeordnet sein. Es besteht auch die Möglichkeit, die Strahlung mehrerer Lichtquellen über ein gemeinsames optisches Umlenkelement auf den Bearbeitungsbereich zu richten. Weiterhin kann die Beleuchtungsstrahlung der Lichtquellen auch durch mehrfache Umlenkung unter Beteiligung mehrerer optischer Umlenkelemente auf den Bearbeitungsbereich gerichtet werden, um den Strahlweg zwischen den Lichtquellen und dem Bearbeitungsbereich noch zu vergrößern.

Die optischen Umlenkelemente können zur zusätzlichen Strahlformung mit einer konkaven oder konvexen Oberflächengeometrie gefertigt sein. Weiterhin können die Oberflächen der optischen Umlenkelemente eine glatte oder raue Oberflächenstruktur aufweisen, um dadurch eine gerichtete oder eine diffuse Reflexion zu ermöglichen. Zur zusätzlichen Strahlformung kann auch ein fokussierendes oder defokussierendes Element vor der jeweiligen emittierenden Fläche der Lichtquelle oder nach den optischen Umlenkelementen angebracht sein. Die optischen Umlenkelemente können zum gleichen Zweck auch sphärisch oder anders als plan geformt sein, bzw. mit einer diskontinuierlichen Neigung ausgestattet sein, ähnlich Facettenspiegeln.

In einer weiteren Ausgestaltung können die einzelnen optischen Umlenkelemente auch jeweils mit einem Piezoelement oder anderem Aktor gekoppelt sein, der nieder- oder hochfrequente, vorzugsweise translatorische Schwingungen erzeugt, die auf das Umlenkelement übertragen werden. Dadurch können die Beleuchtungsstrahlen im Bearbeitungsbereich periodisch axial oder lateral um eine geringe Distanz versetzt werden. Liegt die Periodendauer dieser Schwingungen im Bereich der Belichtungszeit des optischen Detektors, so führt die örtliche Mischung der Beleuchtungsstrahlen der Lichtquellen bspw. zur Reduktion der Kohärenz der Gesamtstrahlung.

Als Lichtquellen kommen beim vorgeschlagenen Bearbeitungskopf gemäß der Erfindung Halbleiterlichtquellen zum Einsatz, wobei es sich sowohl um kohärente als auch um inkohärente Strahlung handeln kann. Besonders bevorzugt ist der Einsatz von VCSEL- (vertical cavity surface emitting laser) oder VECSEL- (vertical extended cavity surface emission laser) Arrays als Lichtquellen, die jeweils nur einen geringen Grad an Kohärenz aufweisen und bei sehr kompakten Abmessungen eine hohe Ausgansleistung erreichen. Ein derartiges Array stellt dabei eine einzelne Lichtquelle in der vorgeschlagenen Beleuchtungseinheit dar. Das Array besteht wiederum aus einer sehr großen Anzahl von Einzelemittern (VCSELs oder VECSELs), die in der Größenordnung von ≥ 1000 liegen kann. So sind bspw. VCSEL-Arrays mit 2000 Einzelemittern bei seitlichen Abmessungen des Arrays von nur etwa 2x2 mm kommerziell erhältlich. Auch der Einsatz von anderen Laserdioden oder von LEDs ist möglich.

Der optische Detektor, vorzugsweise eine Kamera, ist beim vorgeschlagenen Bearbeitungskopf im Falle der Bearbeitung mit Laserstrahlung durch eine Fokussiereinheit hindurch vorzugsweise so angeordnet, dass er die vom Bearbeitungsbereich koaxial zur optischen Achse der Fokussiereinheit oder unter kleinem Winkel zu dieser Achse (z.B. zum Ausgleich der Scheimpflug-Bedingung) reflektierte und/oder rückgestreute Beleuchtungsstrahlung erfasst, wie dies bspw. auch in der eingangs genannten WO 00/29166 A1 beschrieben ist.

Optional kann die Beleuchtungseinheit des vorgeschlagenen Bearbeitungskopfes auch um eine Linienoptik zu Triangulationszwecken erweitert werden. Dabei wird eine Lichtlinie in den Bereich der unmittelbaren Bearbeitungszone projiziert, welche ebenfalls von dem optischen Detektor erfasst wird. Diese Linie kann mit Hilfe einer Lichtquelle eingeblendet werden, die im Bereich einer im Vergleich zu den anderen Lichtquellen unterschiedlichen Wellenlänge emittiert, um dann über einen geeigneten Strahlteiler auf einen zweiten Sensor bzw. optischen Detektor ausgekoppelt zu werden. Darüber hinaus kann die Beleuchtungsstrahlung auch im Wechsel mit der Triangulationslinie gleicher oder anderer Wellenlänge geschaltet werden, so dass der gleiche optische Detektor im Wechsel ein Abbild des Beleuchtungsbereiches und ein Abbild der Triangulationslinie liefert.

Gemäß der Erfindung sind mehrere der für die Beleuchtung eingesetzten Lichtquellen mit den zugehörigen optischen Umlenkelementen als Module in die Beleuchtungseinheit eingesetzt. Diese modulare Bauweise ermöglicht eine Konfiguration der Beleuchtung je nach aktuellem Anwendungsfall, da die Beleuchtungseinheit dadurch mit weiteren Modulen ergänzt werden kann oder auch Module aus der Beleuchtungseinheit leicht entfernt werden können.

Der vorliegende Bearbeitungskopf lässt sich sehr vorteilhaft bei der Lasermaterialbearbeitung einsetzen. Die Beleuchtungseinheit und der optische Detektor ermöglichen dabei eine Kamera-basierte Prozessüberwachung, bspw. von Laserlöt- und Laserschweißapplikationen, Laserkunststoffschweißen oder Laserschneiden. Der Bearbeitungskopf lässt sich auch bei anderen Laserbearbeitungsprozessen einsetzen, bspw. beim Lichtbogenschweißen. Weitere Anwendungsmöglichkeiten des Bearbeitungskopfes liegen in der Ermittlung von Bauteileigenschaften bei der Bearbeitung eines Bauteils, insbesondere von Position und/oder Abmaß und/oder Bearbeitungsstelle, der Beobachtung des Prozessverlaufs der Materialbearbeitung zur Ermittlung relevanter Kenngrößen und/oder zur Anpassung von Stellgrößen, der Beobachtung von Qualitätsmerkmalen während oder nach der Materialbearbeitung oder der Bestimmung von Produkteigenschaften nach der Materialbearbeitung zur Überprüfung der Bearbeitungsqualität. Der Bearbeitungskopf lässt sich auch bei Verfahren zur zerstörungsfreien Prüfung von Produkten oder für Akquise und Extraktion von Informationen über den Bearbeitungsprozess zur Dokumentation des Bearbeitungsverlaufs und/oder der Prozess-stabilität und/oder der Produktqualität einsetzen.

Zusätzlich zur Erfassung des Bearbeitungsbereiches kann die Beleuchtungseinheit bei entsprechend leistungsstarken Lichtquellen wie bspw. VCSEL- oder VECSEL-Arrays auch zum Vorwärmen des Bearbeitungsbereiches eingesetzt werden. Der Einsatz leistungsstarker Lichtquellen wird bei dem vorgeschlagenen Bearbeitungskopf erleichtert, da die Lichtquellen aufgrund ihrer seitlichen Anordnung in der Beleuchtungseinheit gut gekühlt werden können. So werden gemäß der Erfindung bei Nutzung von Halbleiterlichtquellen wie bspw. VCSEL- oder VECSEL-Arrays, die auf plattenförmigen Trägern oder Platinen aufgebracht sind, diese Träger unter einem Winkel < 45° zur Beleuchtungsrichtung, vorzugsweise parallel oder annähernd parallel zur Beleuchtungsrichtung, im Randbereich der Beleuchtungseinheit angeordnet, bspw. an der inneren Gehäusewandung der Beleuchtungseinheit oder des Bearbeitungskopfes, so dass sie von außen optimal gekühlt werden können. Damit wird die Bereitstellung einer hohen Lichtintensität ermöglicht, welche bei entsprechend verteilter Anordnung der Lichtquellen und Umlenkelemente richtungsunabhängig und homogen über den gesamten Bearbeitungsbereich verteilt werden kann.

Die Beleuchtung kann mit kohärenter oder inkohärenter Strahlung sowohl im Dauer- als auch im Pulsbetrieb erfolgen. Trotz kompakter Bauform der Beleuchtungseinheit wird durch die Umlenkelemente ein ausreichend langer Strahlweg erzeugt, durch den bei divergenter Abstrahlcharakteristik der Lichtquellen die ausgeleuchtete Fläche vergrößert wird. Die Beleuchtungseinheit ermöglicht die Überlagerung mehrerer Beleuchtungs- bzw. Lichtquellen, z.B. eine ringförmige Anordnung um den Bearbeitungsstrahlengang herum, welche ggf. ein oder mehrere Umlenkelemente gemeinsam nutzen. Damit werden eine Richtungsunabhängigkeit und eine Minimierung der örtlichen Kohärenz erreicht.

### Kurze Beschreibung der Zeichnungen

Der vorgeschlagene Bearbeitungskopf wird nachfolgend anhand von Ausführungsbeispielen in Verbindung mit den Zeichnungen nochmals näher erläutert. Hierbei zeigen:
- Fig. 1: ein erstes Beispiel einer Ausgestaltung des vorgeschlagenen Bearbeitungskopfes;
- Fig. 2: ein zweites Beispiel einer Ausgestaltung des vorgeschlagenen Bearbeitungskopfes;
- Fig. 3: eine Draufsicht auf eine Beleuchtungseinheit einer dritten Ausgestaltung des vorgeschlagenen Bearbeitungskopfes;
- Fig. 4: ein viertes Beispiel einer Ausgestaltung des vorgeschlagenen Bearbeitungskopfes;
- Fig. 5: eine Draufsicht auf eine Beleuchtungseinheit einer weiteren Ausgestaltung des vorgeschlagenen Bearbeitungskopfes; und
- Fig. 6: ein fünftes Beispiel einer Ausgestaltung des vorgeschlagenen Bearbeitungskopfes.

### Wege zur Ausführung der Erfindung

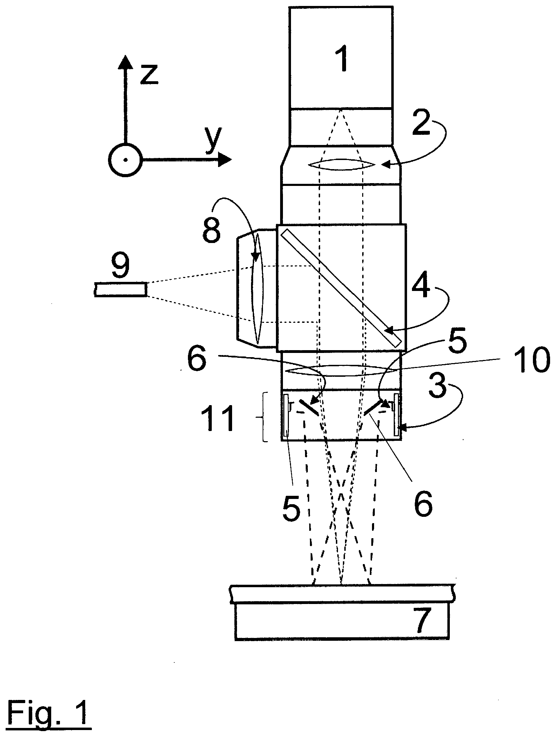

Eine erste Ausgestaltung des vorgeschlagenen Bearbeitungskopfes ist in Figur 1 dargestellt. Der Bearbeitungskopf weist eine Kamera 1 als optischer Detektor, eine Bearbeitungsoptik bestehend aus der Kollimationsoptik 8 und der Fokussieroptik bzw. Fokussiereinheit 10 sowie eine Beleuchtungseinheit 11 auf. Der Bearbeitungslaserstrahl eines Bearbeitungslasers wird in diesem Beispiel über eine Lichtleitfaser an den Bearbeitungskopf herangeführt und seitlich über den Faseranschluss 9 in den Bearbeitungskopf eingekoppelt. In anderen Ausgestaltungen kann der Bearbeitungslaser auch direkt im Bearbeitungskopf integriert sein. Im Bearbeitungskopf wird der Bearbeitungslaserstrahl dann über die Kollimationsoptik 8 kollimiert und nach einer Umlenkung über die Fokussieroptik 10 auf die Oberfläche eines Werkstücks 7 fokussiert. Die Kamera 1 ist koaxial oder unter kleinem Winkel zur optischen Achse in den Strahlengang des Bearbeitungslaserstrahls integriert. Eine abbildende Optik 2 sorgt zusammen mit der Fokussieroptik 10 für eine Abbildung des Bearbeitungsbereichs auf der Oberfläche des Werkstücks 7 auf den Kamerachip. Die Kamera 1 empfängt das vom Werkstück 7 bzw. dem Bearbeitungsbereich auf dem Werkstück 7 gestreute bzw. reflektierte Licht mehrerer Beleuchtungsquellen 5. Die Wellenlänge der Beleuchtung wird über den dichroitischen Spiegel 4 von der Wellenlänge des Bearbeitungslasers separiert. Die Beleuchtungs- bzw. Lichtquellen 5 sind seitlich in der Beleuchtungseinheit 11 angeordnet. Diese Lichtquellen sind auf Platinen 3 aufgebracht, die an der seitlichen Wandung der Beleuchtungseinheit 11 befestigt sind. Sie sind derart angeordnet, dass sie die Beleuchtungsstrahlung senkrecht zur Achse des Bearbeitungslaserstrahls bzw. zur optischen Achse der Fokussieroptik 10 (z-Achse) auf Spiegel 6 lenken, durch die die Beleuchtungsstrahlung dann auf die Oberfläche des Werkstücks 7 in den Bearbeitungsbereich gerichtet und dort überlagert wird. Anstelle von Spiegeln 6 können selbstverständlich auch andere optische Umlenkelemente für die Beleuchtungsstrahlung, bspw. Prismen, eingesetzt werden. Die Richtungsunabhängigkeit der Beleuchtung des Bearbeitungsbereiches wird durch Anordnung mehrerer Lichtquellen 5 um die optische Achse der Fokussieroptik 10 erreicht.

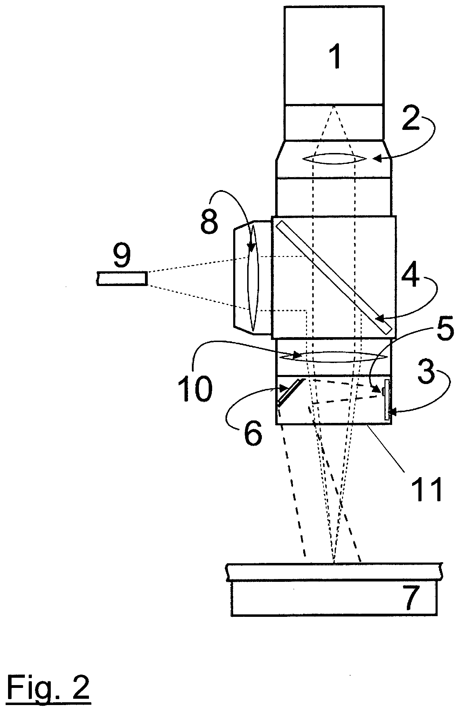

Figur 2 zeigt eine weitere Ausgestaltung des vorgeschlagenen Bearbeitungskopfes, die sich nur im Aufbau der Beleuchtungseinheit 11 von der Ausgestaltung der Figur 1 unterscheidet. In diesem Beispiel erfolgt die Umlenkung der von den Lichtquellen 5 waagrecht abgestrahlten Beleuchtungsstrahlung durch entsprechende Umlenkelemente bzw. Spiegel 6, die jeweils auf der gegenüberliegenden Seite der Beleuchtungseinheit 11 angeordnet sind. Daraus ergibt sich für die Beleuchtungsstrahlung ein nochmals verlängerter optischer Weg und auf den Spiegeln 6 eine reduzierte Leistungsdichte der Beleuchtungsstrahlung. In Kombination mit dem Abstrahlwinkel kann damit ein noch größerer Bereich annähernd homogen ausgeleuchtet werden.

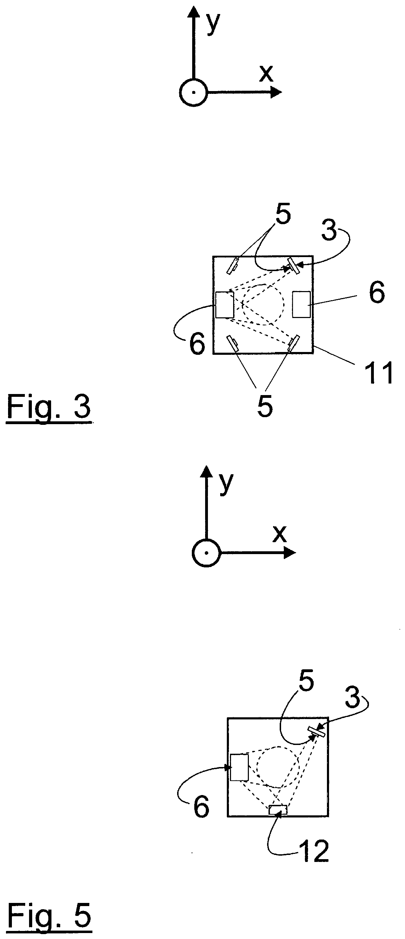

Für eine Überlagerung der Beleuchtungsstrahlung mehrerer Lichtquellen mit dem Ziel der Richtungsunabhängigkeit kann auch ein einzelner Spiegel von mehreren Lichtquellen genutzt werden. Dies ist in der Draufsicht auf eine beispielhafte Ausgestaltung der Beleuchtungseinheit in Figur 3 zu erkennen, in der zwei Spiegel 6 für die Umlenkung der Beleuchtungsstrahlung von vier Lichtquellen 5 eingesetzt werden. Dabei können die beiden Spiegel 6 zusätzlich auch mit einem Piezoantrieb in translatorische Schwingungen versetzt werden, um die Kohärenz des Lichtes bei ähnlicher Dauer von Schwingung und Integrationszeit der Kamera zu minimieren. Dies ist auch bei allen anderen Ausführungsbeispielen möglich.

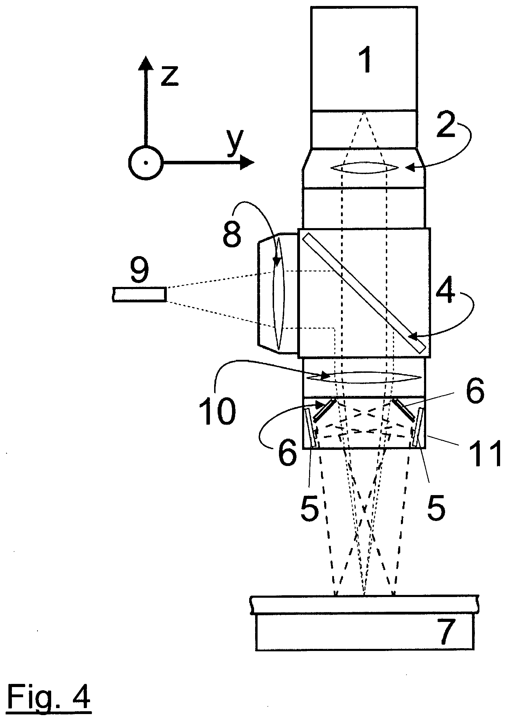

Auch die weitere beispielhaft dargestellte Ausgestaltungsvariante der Figur 4 unterscheidet sich nur im Aufbau der Beleuchtungseinheit von den vorangehenden Ausgestaltungen. Selbstverständlich kann jedoch bei allen Ausgestaltungen der Aufbau der Bearbeitungsoptik sowie die Anordnung des optischen Detektors von den hier dargestellten Beispielen abweichen. Bei der Ausgestaltung der Figur 4 sind die Lichtquellen 5 und die Umlenkelemente bzw. Spiegel 6 in unterschiedlichen Ebenen senkrecht zur optischen Achse der Fokussieroptik 10 (z-Achse) angebracht. Die Lichtquellen 5 sind dabei unter einem kleinen Winkel zur z-Achse angeordnet, so dass sie die Beleuchtungsstrahlung auf diese in der Höhe versetzten Umlenkelemente richten können. Die Umlenkelemente sind wiederum jeweils auf der den Lichtquellen 5 gegenüberliegenden Seite der Beleuchtungseinheit 11 angebracht, wie dies im Zusammenhang mit Figur 2 bereits erläutert wurde.

Zur weiteren Verlängerung des Strahlweges kann die Beleuchtungsstrahlung auch über mehrere Umlenkungen auf das Werkstück 7 bzw. in den Bearbeitungsbereich gerichtet werden. Figur 5 zeigt hierzu eine Draufsicht auf eine entsprechend ausgestaltete Beleuchtungseinheit 11, bei der die Strahlung der Lichtquelle 5 in der Ebene senkrecht zur optischen Achse der Fokussieroptik 10 über einen ersten Spiegel 11 auf einen zweiten Spiegel 6 gerichtet wird. Die Umlenkung auf das Werkstück 7 erfolgt dann über den zweiten Spiegel 6. Die Umlenkung zwischen erstem 11 und zweitem Spiegel 6 kann davon abweichend natürlich auch außerhalb der Ebene senkrecht zur optischen Achse der Fokussieroptik erfolgen, falls die beiden Spiegel in der Höhe (z-Achse) versetzt zueinander angeordnet sind. Da sich der divergente Strahlengang der Lichtquelle 5 durch die mehrfache Umlenkung nochmals verlängert, wird durch eine derartige Ausgestaltung bei divergentem Beleuchtungsstrahl eine nochmals vergrößerte Fläche auf dem Werkstück 7 ausgeleuchtet.

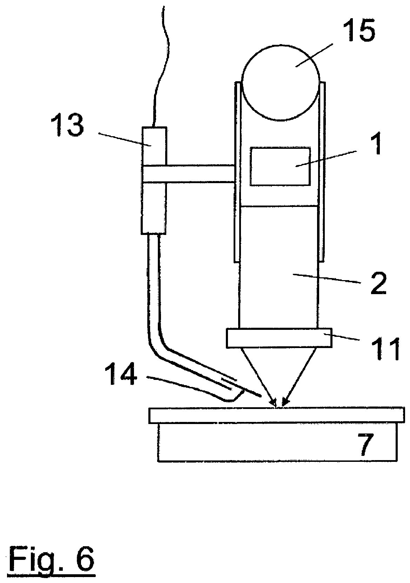

Figur 6 zeigt schließlich eine Ausgestaltung des vorgeschlagenen Bearbeitungskopfes für das Lichtbogenschweißen. Bei dieser Ausgestaltung umfasst der Bearbeitungskopf wiederum eine Beleuchtungseinheit 11 zur Beleuchtung des Bearbeitungsbereiches auf dem Werkstück 7, die in gleicher Weise ausgestaltet sein kann wie bei der vorangegangenen Ausführungsbeispielen. Eine abbildende Optik 2 erzeugt eine Abbildung des Bearbeitungsbereichs auf der Oberfläche des Werkstücks 7 auf den Kamerachip der Kamera 1. Die Kamera 1 empfängt somit das vom Werkstück 7 bzw. dem Bearbeitungsbereich auf dem Werkstück 7 gestreute bzw. reflektierte Licht einer oder mehrerer Beleuchtungsquellen der Beleuchtungseinheit 11. Die Bearbeitung erfolgt bei dieser Ausgestaltung durch Lichtbogenschweißen mit Hilfe einer Drahtelektrode (Schweißdraht 14) eines Schweißbrenners. Der Brennergriff 13 ist hierzu über eine Führungseinrichtung fest mit dem optischen System verbunden. Der Brenner kann auch vollständig integriert sein, so dass dann kein Brennergriff mehr vorhanden ist. Der Bearbeitungskopf wird in diesem Beispiel über einen Roboterarm geführt, dessen Robotergelenk 15 in der Figur angedeutet ist. Bei einer derartigen Ausgestaltung des Bearbeitungskopfes lässt sich auch beim Lichtbogenschweißen die Fügezone in Aufsicht bei nur geringer Störkontur beobachten.

### Bezugszeichenliste

- 1: Kamera
- 2: abbildende Optik
- 3: Platine
- 4: dichroitischer Spiegel oder Lochspiegel
- 5: Lichtquelle
- 6: Spiegel
- 7: Werkstück
- 8: Kollimationsoptik
- 9: Faseranschluss
- 10: Fokussieroptik
- 11: Beleuchtungseinheit
- 12: weiterer Spiegel
- 13: Brennergriff
- 14: Schweißdraht/Elektrode
- 15: Robotergelenk

## Patentansprüche

1. Bearbeitungskopf für die Materialbearbeitung, mit wenigstens
- einer Führungseinrichtung für einen Bearbeitungsstrahl und/oder wenigstens eine Elektrode, mit der der Bearbeitungsstrahl auf einen Bearbeitungsbereich gerichtet und/oder die wenigstens eine Elektrode an einen Bearbeitungsbereich herangeführt werden kann,
- einer Beleuchtungseinheit (11), die mehrere Lichtquellen (5) aufweist und durch die Lichtquellen (5) erzeugte Beleuchtungsstrahlung in Beleuchtungsrichtung des Bearbeitungsbereiches emittieren kann, wobei die Lichtquellen (5) Halbleiterelemente sind, und
- einem optischen Detektor (1), mit dem während der Materialbearbeitung vom Bearbeitungsbereich reflektierte und/oder rückgestreute Beleuchtungsstrahlung erfassbar ist,
und wobei die Beleuchtungseinheit (11) mehrere Umlenkelemente (6, 12) für eine Umlenkung optischer Strahlung um einen festen Winkel aufweist,
**dadurch gekennzeichnet, dass**
- die Lichtquellen (5) und Umlenkelemente (6, 12) so in der Beleuchtungseinheit (11) angeordnet sind, dass die von den Lichtquellen (5) erzeugte Beleuchtungsstrahlung über die Umlenkelemente (6, 12) in Beleuchtungsrichtung des Bearbeitungsbereiches gerichtet wird und sich im Bearbeitungsbereich wenigstens teilweise überlagert,
- wobei die Lichtquellen (5) auf Trägerplatten (3), die unter einem Winkel < 45° zur Beleuchtungsrichtung in der Beleuchtungseinheit (11) befestigt sind, im Randbereich der Beleuchtungseinheit angeordnet sind.

2. Bearbeitungskopf nach Anspruch 1, **dadurch gekennzeichnet, dass** die Führungseinrichtung eine Bearbeitungsoptik mit einer Fokussiereinheit (10) aufweist, mit der ein Laserstrahl als Bearbeitungsstrahl auf den Bearbeitungsbereich fokussierbar ist.

3. Bearbeitungskopf nach einem der Ansprüche 1 bis 2, **dadurch gekennzeichnet, dass** die Umlenkelemente (6, 12) jeweils in einem Randbereich der Beleuchtungseinheit (11) angeordnet sind.

4. Bearbeitungskopf nach einem der Ansprüche 1 bis 3, **dadurch gekennzeichnet, dass** laterale Abmessungen der Beleuchtungseinheit (11) die lateralen Abmessungen der Führungseinrichtung nicht überschreiten.

5. Bearbeitungskopf nach einem der Ansprüche 1 bis 4, **dadurch gekennzeichnet, dass** die Lichtquellen (5) und Umlenkelemente (6, 12) so in der Beleuchtungseinheit (11) angeordnet sind, dass sich die von den Lichtquellen (5) erzeugte Beleuchtungsstrahlung erst nach mehrfacher Umlenkung unter Beteiligung mehrerer der Umlenkelemente (6, 12) auf den Bearbeitungsbereich gerichtet wird.

6. Bearbeitungskopf nach einem der Ansprüche 1 bis 5, **dadurch gekennzeichnet, dass** die Lichtquellen (5) und Umlenkelemente (6, 12) in der gleichen Ebene senkrecht zur Beleuchtungsrichtung angeordnet sind.

7. Bearbeitungskopf nach einem der Ansprüche 1 bis 5, **dadurch gekennzeichnet, dass** die Lichtquellen (5) in einer ersten Ebene und die Umlenkelemente (6, 12) in einer zweiten Ebene senkrecht zur Beleuchtungsrichtung angeordnet sind.

8. Bearbeitungskopf nach einem der Ansprüche 1 bis 7, **dadurch gekennzeichnet, dass** eines oder mehrere der Umlenkelemente (6, 12) jeweils mit einem Aktor verbunden ist, durch den es in Schwingungen versetzt werden kann.

9. Bearbeitungskopf nach einem der Ansprüche 1 bis 8, **dadurch gekennzeichnet, dass** die Umlenkelemente (6, 12) als strahlformende Elemente ausgebildet sind.

10. Bearbeitungskopf nach einem der Ansprüche 1 bis 9, **dadurch gekennzeichnet, dass** der optische Detektor (1) so im Bearbeitungskopf angeordnet ist, dass er die vom Bearbeitungsbereich koaxial zur Beleuchtungsrichtung reflektierte und/oder rückgestreute Beleuchtungsstrahlung erfasst.

11. Verwendung des Bearbeitungskopfes nach einem der Ansprüche 1 bis 10 zur Ermittlung von Bauteileigenschaften bei der Bearbeitung eines Bauteils, insbesondere von Position und/oder Abmaß und/oder Bearbeitungsstelle.

12. Verwendung des Bearbeitungskopfes nach einem der Ansprüche 1 bis 10 für eine Beobachtung des Prozessverlaufs der Materialbearbeitung zur Ermittlung relevanter Kenngrößen und/oder zur Anpassung von Stellgrößen.

13. Verwendung des Bearbeitungskopfes nach einem der Ansprüche 1 bis 10 für eine Beobachtung von Qualitätsmerkmalen während oder nach der Materialbearbeitung.

14. Verwendung des Bearbeitungskopfes nach einem der Ansprüche 1 bis 10 für eine Bestimmung von Produkteigenschaften nach der Materialbearbeitung zur Überprüfung der Bearbeitungsqualität.

15. Verwendung des Bearbeitungskopfes nach einem der Ansprüche 1 bis 10 für eine Anwendung eines oder mehrerer Verfahren zur zerstörungsfreien Prüfung von Produkten.

16. Verwendung des Bearbeitungskopfes nach einem der Ansprüche 1 bis 10 für Akquise und Extraktion von Informationen über den Bearbeitungsprozess zur Dokumentation des Bearbeitungsverlaufs und/oder der Prozessstabilität und/oder der Produktqualität.

## Claims

1. Machining head for the machining of materials, having at least
- one guiding device for a machining beam and/or at least one electrode, with which the machining beam is directed onto a machining region and/or the at least one electrode can be moved towards a machining region,
- an illumination unit (11), which has multiple light sources (5) and can emit illuminating radiation generated by the light sources (5) in the direction of illumination of the machining region, wherein the light sources (5) are semiconductor elements, and
- an optical detector (1), with which illuminating radiation reflected and/or scattered back from the machining region during the material machining can be detected,
and wherein the illumination unit (11) has multiple deflecting elements (6, 12) for deflecting optical radiation at a fixed angle,
**characterised in that**
- the light sources (5) and deflecting elements (6, 12) are arranged in the illumination unit (11), such that the illuminating radiation generated by the light sources (5) is directed in the direction of the illumination of the machining region via the deflecting elements (6, 12) and is at least partly superimposed in the machining region,
- wherein the light sources (5) are arranged on mounting plates (3), which are fastened at an angle < 45° to the direction of illumination in the illumination unit (11), in the edge region of the illumination unit.

2. Machining head according to claim 1, **characterised in that** the guiding device has an optical machining system with a focussing unit (10), with which a laser beam can be focussed onto the machining region as machining beam.

3. Machining head according to any of claims 1 to 2, **characterised in that** the deflecting elements (6, 12) are each arranged in an edge region of the illumination unit (11).

4. Machining head according to any of claims 1 to 3, **characterised in that** lateral dimensions of the illumination unit (11) do not exceed the lateral dimensions of the guiding device.

5. Machining head according to any of claims 1 to 4, **characterised in that** the light sources (5) and deflecting elements (6, 12) are arranged in the illumination unit (11), such that the illuminating radiation generated by the light sources (5) is not directed onto the machining region until it has been deflected multiple times with the involvement of a plurality of the deflecting elements (6, 12).

6. Machining head according to any of claims 1 to 5, **characterised in that** the light sources (5) and deflecting elements (6, 12) are arranged in the same plane perpendicular to the direction of illumination.

7. Machining head according to any of claims 1 to 5, **characterised in that** the light sources (5) are arranged in a first plane and the deflecting elements (6, 12) are arranged in a second plane perpendicular to the direction of illumination.

8. Machining head according to any of claims 1 to 7, **characterised in that** one or more of the deflecting elements (6, 12) is each connected to an actuator, by means of which it can be caused to oscillate.

9. Machining head according to any of claims 1 to 8, **characterised in that** the deflecting elements (6, 12) are formed as beam-shaping elements.

10. Machining head according to any of claims 1 to 9, **characterised in that** the optical detector (1) is arranged in the machining head, such that it detects the illuminating radiation reflected and/or scattered back from the machining region coaxially to the direction of illumination.

11. Use of the machining head according to any of claims 1 to 10 to ascertain component properties in the machining of a component, in particular position and/or dimensional deviation and/or machining site.

12. Use of the machining head according to any of claims 1 to 10 for an observation of the course of the material machining process, to ascertain relevant characteristic values and/or to adjust control variables.

13. Use of the machining head according to any of claims 1 to 10 for an observation of quality features during or after the material machining.

14. Use of the machining head according to any of claims 1 to 10 for a determination of product properties after the material machining, to check the machining quality.

15. Use of the machining head according to any of claims 1 to 10 for a use of one or more methods for the non-destructive testing of products.

16. Use of the machining head according to any of claims 1 to 10 for acquisition and extraction of information about the machining process, to document the course of machining and/or the process stability and/or the product quality.

## Revendications

1. Tête d'usinage pour l'usinage de matériau, avec au moins
- un dispositif de guidage pour un rayon d'usinage et/ou pour au moins une électrode, avec lequel le rayon d'usinage peut être dirigé sur une zone d'usinage et/ou qui peut approcher d'une zone d'usinage l'au moins une électrode,
- une unité d'éclairage (11), qui comporte plusieurs sources lumineuses (5) et qui peut émettre un rayonnement éclairant produit par les sources lumineuses (5) dans la direction d'éclairage de la zone d'usinage, les sources lumineuses (5) étant des éléments à semiconducteurs, et
- un détecteur optique (1), avec lequel un rayonnement éclairant réfléchi et/ou rétrodiffusé par la zone d'usinage pendant l'usinage de matériau peut être détecté,
et dans lequel l'unité d'éclairage (11) comporte plusieurs éléments déflecteurs (6, 12) pour dévier d'un angle fixe un rayonnement optique,
**caractérisée en ce que**
- les sources lumineuses (5) et éléments déflecteurs (6, 12) sont agencés de telle manière dans l'unité d'éclairage (11) que le rayonnement éclairant produit par les sources lumineuses (5) est dirigé par l'intermédiaire des éléments déflecteurs (6, 12) dans la direction d'éclairage de la zone d'usinage et se superpose au moins partiellement dans la zone d'usinage,
- dans laquelle les sources lumineuses (5) sont agencées dans la zone marginale de l'unité d'éclairage sur des plaques de support (3) qui sont fixées sous un angle < 45° par rapport à la direction d'éclairage dans l'unité d'éclairage (11).

2. Tête d'usinage selon la revendication 1, **caractérisée en ce que** le dispositif de guidage comporte une optique d'usinage avec une unité de focalisation (10) avec laquelle un rayon laser peut être focalisé comme rayon d'usinage sur la zone d'usinage.

3. Tête d'usinage selon l'une quelconque des revendications 1 à 2, **caractérisée en ce que** les éléments déflecteurs (6, 12) sont agencés à chaque fois dans une zone marginale de l'unité d'éclairage (11).

4. Tête d'usinage selon l'une quelconque des revendications 1 à 3, **caractérisée en ce que** des dimensions latérales de l'unité d'éclairage (11) ne dépassent pas les dimensions latérales du dispositif de guidage.

5. Tête d'usinage selon l'une quelconque des revendications 1 à 4, **caractérisée en ce que** les sources lumineuses (5) et éléments déflecteurs (6, 12) sont agencés de telle manière dans l'unité d'éclairage (11) que le rayonnement éclairant produit par les sources lumineuses (5) n'est dirigé sur la zone d'usinage qu'après de multiples déviations faisant intervenir plusieurs des éléments déflecteurs (6, 12).

6. Tête d'usinage selon l'une quelconque des revendications 1 à 5, **caractérisée en ce que** les sources lumineuses (5) et éléments déflecteurs (6, 12) sont agencés dans le même plan perpendiculairement à la direction d'éclairage.

7. Tête d'usinage selon l'une quelconque des revendications 1 à 5, **caractérisée en ce que** les sources lumineuses (5) sont agencées dans un premier plan, et les éléments déflecteurs (6, 12) dans un deuxième plan, perpendiculairement à la direction d'éclairage.

8. Tête d'usinage selon l'une quelconque des revendications 1 à 7, **caractérisée en ce que** l'un ou plusieurs des éléments déflecteurs (6, 12) sont reliés à chaque fois à un actionneur par lequel ils peuvent être mis en oscillation.

9. Tête d'usinage selon l'une quelconque des revendications 1 à 8, **caractérisée en ce que** les éléments déflecteurs (6, 12) sont réalisés sous forme d'éléments formant un rayon.

10. Tête d'usinage selon l'une quelconque des revendications 1 à 9, **caractérisée en ce que** le détecteur optique (1) est agencé de telle manière dans la tête d'usinage qu'il détecte le rayonnement éclairant réfléchi et/ou rétrodiffusé par la zone d'usinage coaxialement à la direction d'éclairage.

11. Utilisation de la tête d'usinage selon l'une quelconque des revendications 1 à 10 en vue de la détermination de propriétés de pièce lors de l'usinage d'une pièce, en particulier de position et/ou de dimension et/ou de point d'usinage.

12. Utilisation de la tête d'usinage selon l'une quelconque des revendications 1 à 10 en vue d'une observation de déroulement de processus de l'usinage de matériau afin de déterminer des grandeurs caractéristiques pertinentes et/ou d'adapter des grandeurs de réglage.

13. Utilisation de la tête d'usinage selon l'une quelconque des revendications 1 à 10 en vue d'une observation de caractéristiques de qualité pendant ou après l'usinage de matériau.

14. Utilisation de la tête d'usinage selon l'une quelconque des revendications 1 à 10 en vue d'une détermination de propriétés de produit après l'usinage de matériau afin de vérifier la qualité d'usinage.

15. Utilisation de la tête d'usinage selon l'une quelconque des revendications 1 à 10 en vue d'une exploitation d'un ou plusieurs procédés destinés à la vérification non destructive de produits.

16. Utilisation de la tête d'usinage selon l'une quelconque des revendications 1 à 10 en vue de l'acquisition et de l'extraction d'informations concernant le processus d'usinage afin de documenter le déroulement de l'usinage et/ou la stabilité du processus et/ou la qualité des produits.
